# EUROPEAN PATENT APPLICATION

(11) **EP 4 414 370 A1**
(43) Date of publication of application: **14.08.2024**
(21) Application number: 22930422.5
(22) Date of filing: 18.04.2022
(51) Int. Cl.: C07F 9/30, C08J 5/04, C08K 5/5313

(54) **ALUMINUM DIETHYLPHOSPHINATE CRYSTAL WITH LOW FINE POWDER CONTENT, AND PREPARATION METHOD THEREFOR AND USE THEREOF**

(30) Priority: 10.03.2022 CN 202210230945
(71) Applicant: Jiangsu Liside New Material Co., Ltd., Taizhou, Jiangsu 225529 (CN)
(72) Inventor: LI, Jinzhong, Taizhou, Jiangsu 225529 (CN); LEI, Hua, Taizhou, Jiangsu 225529 (CN)
(74) Representative: karo IP
(86) International application number: PCT/CN2022/087307
(87) International publication number: WO 2023/168790

(57) **Abstract**

Disclosed are an aluminum diethylphosphinate crystal with a low fine powder content, a preparation method therefor and use thereof in flame retardance of glass fibre-reinforced engineering plastics. In the present invention, a phosphorus-containing aluminum salt complex is used as a seed crystal and is added in a crystallization process of preparing aluminum diethylphosphinate, such that the crystallization process can be effectively regulated and controlled, aluminum diethylphosphinate crystal particles with a low fine powder content, narrow distribution and a large particle size can be obtained, and the problems that the existing aluminum diethylphosphinate powder is prone to bridging, unsmooth feeding and the like can be solved. The present application is applicable to a processing technology of halogen-free flame retardant glass fibre-reinforced engineering plastics. The prepared aluminum diethylphosphinate includes a small amount of phosphorus-containing aluminum salt complex seed crystals, and the flame retardant property of the aluminum diethylphosphinate is not affected.

## Description

### TECHNICAL FIELD

The present invention relates to the field of new materials, and specifically relates to an aluminum diethylphosphinate crystal with a low fine powder content, a preparation method therefor and use thereof. According to the preparation method, a phosphorus-containing aluminum salt complex is used as a seed crystal in order to obtain the aluminum diethylphosphinate crystal with a low fine powder content, and requirements of a preparation process of halogen-free flame retardant glass fibre-reinforced engineering plastics for the fluidity of flame retardant powder are met.

### BACKGROUND

Glass fibre-reinforced engineering plastics (such as various types of nylon, polyester and the like) have been widely used in the field of electrical and electronic appliances because of good rigidity and impact resistance, low warpage, good surface appearance and other performance characteristics. During use in the field, requirements for flame retardance of materials have been put forward. However, after most of engineering plastics, flammable materials, are compounded with glass fibres, the glass fibre-reinforced engineering plastics are easier to burn due to a wick effect of the glass fibres. Therefore, the problem of flame retardance needs to be solved when the glass fibre-reinforced engineering plastics are use in the field, and the flame retardance becomes more difficult due to the wick effect.

Two basic flame retardant systems are used in flame retardance of the glass fibre-reinforced engineering plastics: a halogen-based flame retardant system and a non-halogen flame retardant system. The halogen-based flame retardant system usually includes a bromine-containing flame retardant combined with antimony trioxide. A large number of studies show that the glass fibre-reinforced engineering plastics added with a bromine-based flame retardant will produce dense smoke, hydrogen bromide and other harmful substances during combustion, leading to human suffocation. Therefore, the halogen-free flame retardant system has become a research hotspot in safe development and environmentally friendliness of the glass fibre-reinforced engineering plastics. In recent years, new halogen-free flame retardants or flame retardant systems have been used in the glass fibre-reinforced engineering plastics.

At present, the halogen-free flame retardants used in the glass fibre-reinforced engineering plastics mainly include compounded systems based on aluminum diethylphosphinate, including synergy of aluminum diethylphosphinate and nitrogen-containing compounds, such as a compounded system of aluminum diethylphosphinate and melamine polyphosphate (MPP), and a nitrogen-free compounded system of aluminum diethylphosphinate and aluminum phosphite. These systems have the characteristics of high flame retardance, high temperature resistance, no color disturbance and the like, and have been widely used at present. However, the compounded systems based on aluminum diethylphosphinate usually have small particle sizes and fluidity problems when used in preparation of flame retardant materials by means of a twin-screw extruder, which are prone to the problems of powder bridging, unsmooth feeding and the like, such that long period operation is difficult to realize. In view of the problems, a conventional solution includes preparing flame retardant powder into high-concentration flame retardant masterbatch. However, the solution obviously has the following problems: (1) the cost of making the masterbatch at a time is increased; and (2) polymer carriers are required in the masterbatch, but the carriers cannot be used as the carriers cause inflexibility to a formulation of downstream materials and even affects properties of the materials. Therefore, the solution of preparing high-concentration masterbatch is not an optimal solution to solve the feeding problem of aluminum diethylphosphinate, and it is necessary to find a solution from the aluminum diethylphosphinate to solve the problem of unsmooth feeding.

As found through research, the key cause of bridging and unsmooth feeding of aluminum diethylphosphinate particles during use is the presence of fine powder in the aluminum diethylphosphinate particles. The fine powder has a small particle size, which is usually less than 5 µm. A smaller particle size indicates a larger specific surface area and a larger action force between particles. When the proportion of this part of fine powder exceeds a certain number, bridging and unsmooth feeding are likely to be caused. Therefore, the key to solve the problem of unsmooth feeding is to control the proportion of the fine powder in the aluminum diethylphosphinate.

From the perspective of a preparation process of aluminum diethylphosphinate, the aluminum diethylphosphinate particles are prepared by means of low water solubility and crystallization characteristics of the aluminum diethylphosphinate, and are obtained by crystallization precipitation in a water phase through a double decomposition reaction. An actual granulation process is a crystallization process. As observed with an electron microscope, the aluminum diethylphosphinate particles are composed of a large number of small-size sheet-like small grains that are stacked together, and the small grains have an extremely small size. Since stacking is a random process, crystal particles have wide size distribution under natural crystallization conditions. Meanwhile, the molecular structure of the aluminum diethylphosphinate contains an oleophilic ethyl group and a hydrophilic aluminum salt structure, and that is to say, the molecular structure contains both an oleophilic part and a hydrophilic part. The stacking of the small grains will lead to repulsion, the structure formed by the stacking of the small grains has a weak action force, and particles with a small particle size are more easily obtained under the action of a shear force of a stirrer and the like. Therefore, the aluminum diethylphosphinate particles tend to have a small particle size. In a conventional preparation process, the particles obtained have wide particle size distribution, and that is to say, the conventional aluminum diethylphosphinate particles prepared at present have the characteristics of a small average particle size, wide distribution and a large number of ultrafine particle sizes. These particle size characteristics are causes of unsmooth feeding of the aluminum diethylphosphinate. Therefore, in order to solve the problems, the key to control a crystallization process in a preparation of the aluminum diethylphosphinate is to reduce the proportion of ultrafine particle size particles, reduce the maximum particle size, appropriately increase the average particle size, distribute the particle size of particles near the average particle size as much as possible and achieve narrow particle size distribution. However, no relevant reports on solutions about how to effectively reduce the ultrafine particle size have been found yet.

### SUMMARY

In view of the above technical problems and shortcomings of the field, in the present invention, a phosphorus-containing aluminum salt complex is used as a seed crystal and is added in a crystallization process of preparing aluminum diethylphosphinate, such that the crystallization process can be effectively regulated and controlled, aluminum diethylphosphinate crystal particles with a low fine powder content, narrow distribution and a large particle size can be obtained, and the problems that the existing aluminum diethylphosphinate powder is prone to bridging, unsmooth feeding and the like can be solved. The present invention is applicable to a processing technology of halogen-free flame retardant glass fibre-reinforced engineering plastics. The prepared aluminum diethylphosphinate includes a small amount of phosphorus-containing aluminum salt complex seed crystals, and the flame retardant property of the aluminum diethylphosphinate is not affected.

The main purpose of the present invention is to provide a preparation method for aluminum diethylphosphinate, so as to overcome defects of existing aluminum diethylphosphinate. According to the preparation method of the new invention, aluminum diethylphosphinate crystal particles with a low fine powder content, narrow distribution and a large particle size can be obtained, the fluidity problems of bridging, unsmooth feeding and the like are solved, preparation of high-concentration masterbatch containing carriers is not required, powder is directly used in a processing technology of halogen-free flame retardant glass fibre-reinforced engineering plastics, and meanwhile, high flame retardant property is maintained.

The present invention relates to preparation of aluminum diethylphosphinate with a low fine powder content. A phosphorus-containing aluminum salt complex based on aluminum diethylphosphinate and aluminum ethylbutylphosphinate is used as a seed crystal and is added in a small amount in a preparation process of aluminum diethylphosphinate, such that a crystallization process of aluminum diethylphosphinate can be effectively regulated and controlled, aluminum diethylphosphinate crystal powder with a low fine powder content, narrow distribution and a large particle size can be obtained, the problems that aluminum diethylphosphinate prepared by existing methods has a high content of fine particle size powder, wide distribution and the like are solved, and the fluidity problems of easy bridging, unsmooth feeding and the like during use are avoided.

Specific technical solutions are as follows.

A preparation method for an aluminum diethylphosphinate crystal with a low fine powder content includes: uniformly dispersing a phosphorus-containing aluminum salt complex, as a seed crystal, in an aqueous solution of soluble diethylphosphinate, adding a water-soluble aluminum salt solution containing a strong acid to carry out a reaction at 70-95°C, and after the reaction is completed, fltering, washing and drying a solid product to obtain the aluminum diethylphosphinate crystal with a low fine powder content;
where the phosphorus-containing aluminum salt complex has a structure as shown in a formula (I) below: 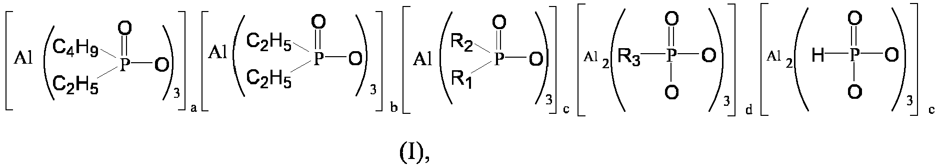 in the formula (I), a, b, c, d and e are all molar ratios, a is 0.1-0.5, b is 0.5-0.9, c, d and e are 0-0.3, and a+b+c+d+e=1; R₁ and R₂ are independently selected from H and C₁-C₆ alkyl, and when one of the R₁ and R₂ is ethyl, the other one is not ethyl and butyl; and R₃ is C₁-C₆ alkyl.

The present invention is described in detail below.

In the present invention, the inventor has conducted extensive and in-depth research for the purpose of solving the fluidity problems of easy bridging, unsmooth feeding and the like of aluminum diethylphosphinate in a halogen-free flame retardant system based on aluminum diethylphosphinate, which has been widely used in glass fibre-reinforced engineering plastics.

As found through research, a phosphorus-containing aluminum salt complex based on aluminum ethylbutylphosphinate has different crystal transition from aluminum diethylphosphinate, and the crystal transition will disappear even under certain conditions. The phosphorus-containing aluminum salt complex contains:
a phosphorus-containing structure as shown in a structural formula (II), and
one or more phosphorus-containing structures as shown in a structural formula (III) and/or a structural formula (IV); 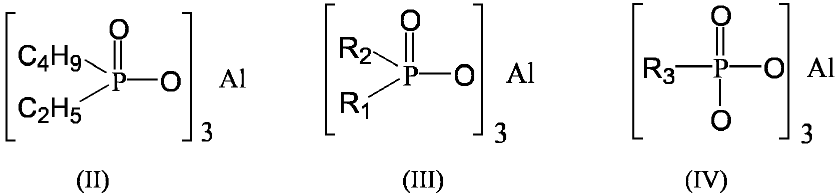
in the structural formula (III), R₁ and R₂ are independently selected from H or C₁-C₆ alkyl, and when one of the R₁ and R₂ is ethyl, the other one is not butyl;
and in the structural formula (IV), R₃ is H or C₁-C₆ alkyl.

The phosphorus-containing aluminum salt complex is different from a single aluminum salt or a mixture of several aluminum salts, which has different properties and is a compound with a new structure.

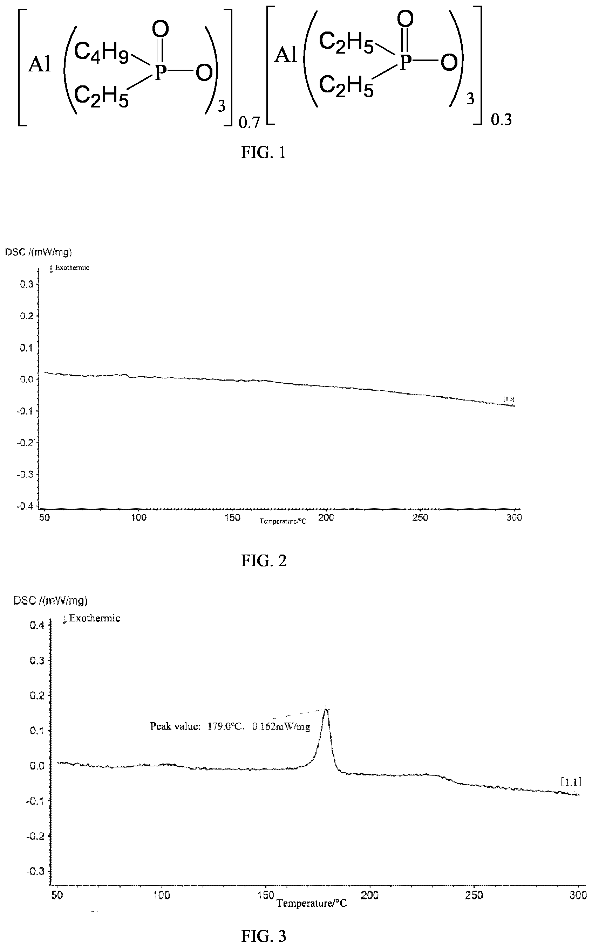

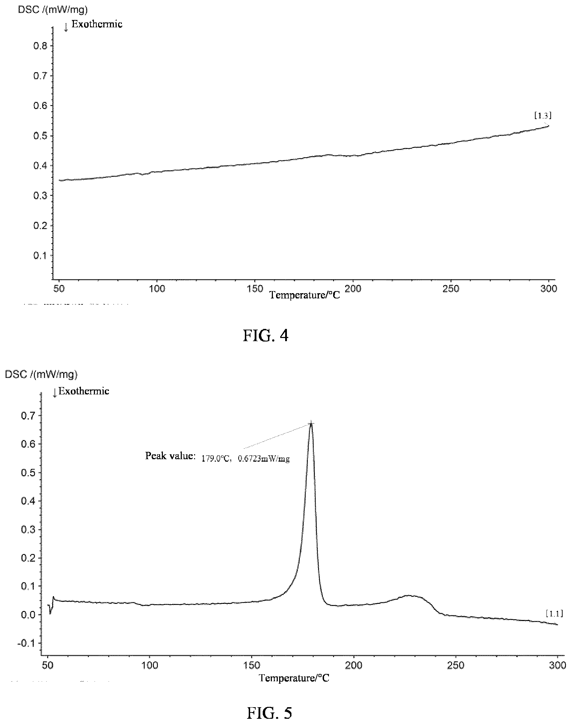

The phosphorus-containing aluminum salt complex is characterized by DSC (differential scanning calorimetry). Taking an aluminum ethylbutylphosphinate (0.7)-aluminum diethylphosphinate (0.3) complex with a molecular structure as shown in FIG. 1 (numbers represent the molar ratio of a compound aluminum salt, same below) as an example, a DSC diagram is shown in FIG. 2. As can be seen from the DSC diagram, the aluminum ethylbutylphosphinate-aluminum diethylphosphinate complex has no crystal transition peak. FIG. 3 is a DSC diagram of a mixture of aluminum ethylbutylphosphinate and aluminum diethylphosphinate (mixed at a molar ratio of 0.7:0.3), and FIG. 4 and FIG. 5 are DSC diagrams of aluminum ethylbutylphosphinate and aluminum diethylphosphinate, respectively. As can be seen from results, the complex with the new structure as shown in FIG. 1 is different from the mixture of the two substances. In the mixture of the two substances, the DSC diagram shows characteristics of the mixture, a crystal transition temperature is a crystal transition temperature of aluminum diethylphosphinate, and an enthalpy value of crystal transition is decreased due to decrease of the ratio. In the complex, a characteristic crystal transition peak of aluminum diethylphosphinate disappears at the same ratio. Therefore, the compound salt is not the mixture of the two substances, but is a new structure.

As found through research, aluminum ethylbutylphosphinate-aluminum diethylphosphinate complexes can be obtained at different ratios of aluminum ethylbutylphosphinate and aluminum diethylphosphinate. As found through further research, the aluminum ethylbutylphosphinate can also form compound aluminum salts with aluminum dialkylphosphinate, aluminum monoalkylphosphite and inorganic aluminum phosphite, and can be compounded with a plurality of different aluminum dialkylphosphinate, aluminum monoalkylphosphite, inorganic aluminum phosphite and the like to obtain phosphorus-containing aluminum salt complexes.

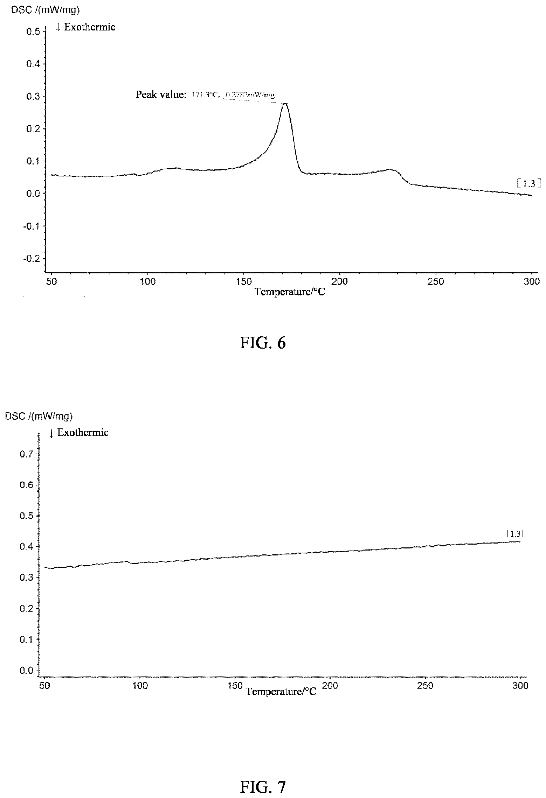

Surprisingly, when a small amount of a phosphorus-containing aluminum salt complex is added into aluminum diethylphosphinate, the crystal transition of aluminum diethylphosphinate can be obviously changed, the crystal transition temperature is decreased, an endothermic/exothermic amount during crystal transition is reduced, and it is found that the crystal transition of aluminum diethylphosphinate disappears at a certain ratio. FIG. 6 is a DSC diagram of a mixture (at a weight ratio of 8:92) formed by adding the aluminum ethylbutylphosphinate-aluminum diethylphosphinate complex prepared above into aluminum diethylphosphinate. As can be seen from the figure, when 8 wt% of the complex is added, the crystal transition temperature of aluminum diethylphosphinate is decreased from 179°C to 171.3°C, the crystal transition of aluminum diethylphosphinate is obviously changed, and the crystal transition temperature is decreased. Moreover, as found through research, with increase of the added proportion of the phosphorus-containing aluminum salt complex, the crystal transition temperature is decreased to a higher extent. When the added amount is 30 wt%, the crystal transition of aluminum diethylphosphinate disappears, and that is to say, no crystal transition occurs in an investigated temperature range. A DSC diagram is as shown in FIG. 7.

As can be seen from the results, the phosphorus-containing aluminum salt complex obviously affects a crystal transition process of aluminum diethylphosphinate, and the crystal transition is closely related to crystallization. Therefore, the inventor proposes that the phosphorus-containing aluminum salt complex affects a crystallization process of preparing aluminum diethylphosphinate, thus affecting the particle size and distribution of crystal particles.

As found through research, in the process of preparing aluminum diethylphosphinate, the phosphorus-containing aluminum salt complex is added to serve as a seed crystal, which can affect the crystallization process, regulate and control the particle size and distribution of crystal particles, and more importantly, can reduce the fine powder content, increase the particle size and narrow the particle size distribution, such that the purposes of the present invention are achieved. As found through research, the phosphorus-containing aluminum salt complex should have a molecular structure as shown in the formula (I).

The formula (I) shows a complex formed with other phosphorus-containing aluminum salts in the presence of aluminum ethylbutylphosphinate and aluminum diethylphosphinate. The other phosphorus-containing aluminum salts include aluminum dialkylphosphinate/aluminum monoalkylphosphinate, aluminum monoalkylphosphite, inorganic aluminum phosphite and the like in addition to the aluminum ethylbutylphosphinate and the aluminum diethylphosphinate, and a phosphorus-containing aluminum salt complex can be formed with one or more of the phosphorus-containing aluminum salts.

The present invention further provides a preferred preparation method for the phosphorus-containing aluminum salt complex, which includes the following steps:
(1) dissolving ethylbutylphosphinic acid and/or soluble ethylbutylphosphinate containing an anion part of the structural formula (II) and other acid and/or soluble salt (phosphorus-containing composite anion donor) containing an anion part of the structural formula (III) and/or the structural formula (IV) involved in compounding in water (a little amount of a strong acid or no strong acid is added to the water), and then adding an aluminum-containing compound (aluminum ion donor) to carry out a reaction at 80-90°C; and
(2) after the reaction is completed, performing solid-liquid separation to obtain a solid, and subjecting the solid to washing and drying, followed by high temperature treatment at 180-450°C to obtain the phosphorus-containing aluminum salt complex.
In the preparation method,
the soluble salt is usually a sodium salt or a potassium salt;
the aluminum-containing compound preferably includes at least one of aluminum sulfate, aluminum nitrate, aluminum chloride, aluminum hydroxide and alumina;
and an end of the washing is preferably that an electrical conductivity of washing effluent is less than 500 µs/cm.

In step (1), the phosphorus-containing composite anion donor and the aluminum ion donor may be added at a molar ratio of a complete reaction.

In step (1), the strong acid includes concentrated sulfuric acid, concentrated nitric acid, concentrated hydrochloric acid or concentrated phosphoric acid, and an added amount may be 2-5% of a mass of the phosphorus-containing composite anion donor.

When the aluminum-containing compound is insoluble in water, the aluminum-containing compound may be dispersed in water to form a suspension dispersion system, so as to carry out a reaction with the phosphorus-containing composite anion donor added in the form of an acid without the presence of a high-concentration strong acid. When the aluminum-containing compound is a water-soluble compound, it is recommended that a reaction is carried out in the presence of a high-concentration strong acid, and the aluminum-containing compound may undergo a reaction with the phosphorus-containing composite anion donor added in the form of a salt.

A mass concentration of the aluminum-containing compound in a reaction system is preferably 15-50%.

In step (1), a reaction time may be 1-5 h.

In step (2),
after the reaction is completed, a solid precipitate can be obtained by controlling the pH value of a liquid phase to be less than 4; the pH value can be controlled by adding an alkali or a metal oxide;
and the drying may be performed by using various ovens, drying rooms, dryers and the like, and a drying temperature may be 100-130°C. The high temperature treatment is a key step of a preparation process, and a treatment process is related to the composition, proportion and treatment capacity of the phosphorus-containing aluminum salt complex. Temperature setting of the high temperature treatment is a key factor of the high temperature treatment. As found through research, when the treatment temperature is lower than 180°C, the phosphorus-containing aluminum salt complex of the present application cannot be obtained, and an upper limit temperature of the high temperature treatment is a decomposition temperature of the complex and is usually lower than 450°C. A process of the high temperature treatment includes: increasing the temperature to 180-450°C for high temperature treatment within 0.5-10 h, and performing high temperature treatment for 1-300 min.

The high temperature treatment process in step (2) can also be carried out in an inert gas atmosphere (such as a nitrogen atmosphere and a rare gas atmosphere) or under vacuum conditions.

After step (2), the obtained phosphorus-containing aluminum salt complex can be milled to a desired particle size as needed.

As found through research, the two steps in the preparation method are indispensable in order to obtain the phosphorus-containing aluminum salt complex of the present invention, and that is to say, the phosphorus-containing aluminum salt complex of the present invention cannot be obtained without the high temperature treatment (including that the treatment temperature is lower than 180°C) or by high temperature heat treatment after dry mixing of several phosphorus-containing aluminum salts.

Detailed description of parameter conditions and introduction of preferred solutions of the preparation method for an aluminum diethylphosphinate crystal with a low fine powder content of the present invention are provided below.

The phosphorus-containing aluminum salt complex has a structure as shown in the formula (I). The molecular structure at least includes a complex of aluminum ethylbutylphosphinate and aluminum diethylphosphinate. On this basis, the complex can also include one or more other phosphorus-containing aluminum salts, and the obtained complex can affect crystallization in a preparation process of aluminum diethylphosphinate, effectively adjust the particle size and distribution of the crystal and obviously reduce the fine powder content. A phosphorus-containing aluminum salt complex without the structure as shown in the formula (I) can still affect the crystallization process, but cannot significantly reduce the fine powder content, such that the purposes of the present application cannot be achieved.

The water-soluble aluminum salt and the soluble diethylphosphinate can be added according to a stoichiometric molar ratio of the aluminum diethylphosphinate product.

The soluble diethylphosphinate may include a sodium salt, a potassium salt and the like, and a mass concentration of the soluble diethylphosphinate in an aqueous solution may be 20-60%.

Calculated with a theoretical mass of the aluminum diethylphosphinate product as 100%, an added amount of the phosphorus-containing aluminum salt complex is preferably 0.01-10%, further preferably 0.1-5%. When the added amount is appropriate, not only can the crystallization process be effectively regulated and controlled, so as to regulate and control the fine powder content, but also great changes in crystallization characteristics of aluminum diethylphosphinate will not be caused. When an excessive amount of the phosphorus-containing aluminum salt complex is added, the fine powder content will not be further effectively reduced. Moreover, the crystal transition of aluminum diethylphosphinate will be significantly affected, and crystallization characteristics of the obtained substance are greatly different from that of pure aluminum diethylphosphinate, which are not the purposes of the present application. When the added amount is too low, regulation and control effects are limited, but the purpose of significantly reducing the fine powder content in the present application cannot be achieved.

An average particle size (D50) of the phosphorus-containing aluminum salt complex satisfies 10 µm<D50<50 µm, and further preferably satisfies 20 µm<D50<40 µm. As found through research, the particle size of the phosphorus-containing aluminum salt complex will affect the regulation and control effects on the crystallization process, and the fine powder content cannot be significantly reduced by using a too small particle size or a too large particle size, such that the purposes of the present application cannot be achieved.

The phosphorus-containing aluminum salt complex further includes at least one of the following components (A)-(C):
(A) one or more non-compound salts of ethylbutylphosphinate, dibutylphosphinate, ethylhexylphosphinate, butylhexylphosphinate and dihexylphosphinate;
(B) alkylphosphite;
(C) one or more of a sulfate, a chloride, a phosphate, a phosphite, a hypophosphite, a nitrate, an acetate, a nitrogen-containing compound, an iron-containing compound, a calcium-containing compound, a magnesium-containing compound, a titanium-containing compound, a sodium-containing compound and a potassium-containing compound.

In the presence of a small amount of the above components (A)-(C), the effect of the phosphorus-containing aluminum salt complex on the crystallization process is not affected, and the fine powder content can still be effectively reduced.

The strong acid includes at least one of sulfuric acid, nitric acid, hydrochloric acid, phosphoric acid and the like.

Calculated with the theoretical mass of the aluminum diethylphosphinate product as 100%, an added amount of the strong acid may be 1-5%.

An aluminum salt in the water-soluble aluminum salt solution preferably includes at least one of aluminum sulfate, aluminum nitrate and aluminum chloride.

A mass concentration of the aluminum salt in the water-soluble aluminum salt solution in a reaction system is preferably 15-50%.

A reaction time may be 1-5 h.

After the reaction is completed, a solid precipitate can be obtained by controlling the pH value of a liquid phase to be less than 4; and the pH value can be controlled by adding an alkali or a metal oxide.

An end of the washing is preferably that an electrical conductivity of washing effluent is less than 500 µs/cm.

The drying may be performed by using various ovens, drying rooms, dryers and the like, and a drying temperature may be 100-130°C. The drying treatment process in step (4) can also be carried out in an inert gas atmosphere (such as a nitrogen atmosphere and a rare gas atmosphere) or under vacuum conditions.

The aluminum diethylphosphinate crystal with a low fine powder content prepared in the present invention may further include one or more mixture impurities of aluminum diethylphosphinate, aluminum ethylbutylphosphinate, aluminum dibutylphosphinate, aluminum ethylhexylphosphinate, aluminum butylhexylphosphinate, aluminum dihexylphosphinate and the like.

The aluminum diethylphosphinate crystal with a low fine powder content includes a phosphorus-containing aluminum salt complex seed crystal having an average particle size (D50) of 20 µm<D50<50 µm and a bulk density of 500-700 g/L, and a content of a fine powder with a particle size of less than 5 µm is less than 10 wt%.

The present invention further provides an aluminum diethylphosphinate crystal with a low fine powder content prepared by the preparation method.

The present invention further provides use of the aluminum diethylphosphinate crystal with a low fine powder content in flame retardance of glass fibre-reinforced engineering plastics.

The glass fibre-reinforced engineering plastics may adopt at least one of polyurethane, a thermoplastic elastomer, an epoxy resin, a thermosetting unsaturated polyester, nylon, a thermoplastic polyester and POK (polyketone) as a polymer matrix.

The aluminum diethylphosphinate crystal with a low fine powder content can be used as a flame retardant or a flame retardant synergist, and is used for, including:
flame retardance of varnish or a foam coating;
flame retardance of wood or a cellulose-containing product;
and preparation of a flame retardant polymer molding material, a flame retardant polymer film or a flame retardant polymer fibre.

The flame retardant polymer molding material, the flame retardant polymer film or the flame retardant polymer fibre, calculated with a total mass as 100%, preferably includes the following raw materials:
55-99.9% of a polymer matrix,
0.1-45% of a flame retardant system,
0-44.9% of a filler or a reinforcing material, and
0-44.9% of an additive.

Calculated by mass percentage, the flame retardant system includes:
1-100% of the aluminum diethylphosphinate crystal with a low fine powder content, and
0-99% of other flame retardant synergists.

In the flame retardant system, other flame retardants or flame retardant synergists may be selected from:
dialkylphosphinic acid and/or salts thereof; condensation products of melamine and/or reaction products of melamine with phosphoric acid and/or reaction products of condensation products of melamine with polyphosphoric acid or mixtures thereof; nitrogen-containing phosphate; benzoguanamine, tri(hydroxyethyl)isocyanurate, allantoin, glycoluril, melamine, melamine cyanurate, dicyandiamide and/or guanidine; magnesia, calcia, alumina, zinc oxide, manganese oxide, tin oxide, aluminum hydroxide, boehmite, binary hydrotalcite, hydrocalumite, magnesium hydroxide, calcium hydroxide, zinc hydroxide, tin oxide hydrate, manganese hydroxide, zinc borate, alkaline zinc silicate and/or zinc stannate; phosphite, hydrogen phosphite salts or condensates thereof; phosphate and derivatives thereof;
melam, melem, melon, dimelamine pyrophosphate, melamine polyphosphate, melam polyphosphate, melon polyphosphate and/or melem polyphosphate and/or mixed polypsalts thereof and/or ammonium hydrogen phosphate, ammonium dihydrogen phosphate and/or ammonium polyphosphate;
aluminum hypophosphite, zinc hypophosphite, calcium hypophosphite, sodium phosphite, monophenylphosphinic acid and salts thereof, mixtures of dialkylphosphinic acid and salts thereof and monoalkylphosphinic acid and salts thereof, 2-carboxyethylalkylphosphinic acid and salts thereof, 2-carboxyethylmethylphosphinic acid and salts thereof, 2-carboxyethylarylphosphinic acid and salts thereof, 2-carboxyethylphenylphosphinic acid and salts thereof, and adducts of DOPO and salts thereof and p-benzoquinone.

Compared with the prior art, the present invention mainly has the following advantages.

According to the preparation method for aluminum diethylphosphinate provided by the present invention, defects of existing methods are overcome, the prepared aluminum diethylphosphinate has the particle characteristics of a low fine powder content, a large particle size and narrow distribution, the fluidity problems of easy bridging, unsmooth feeding and the like are solved, the aluminum diethylphosphinate can be directly used in a processing technology of halogen-free flame retardant glass fibre-reinforced engineering plastics, and long period operation can be realized.

### BRIEF DESCRIPTION OF THE DRAWINGS

FIG. 1 shows a molecular structure of an aluminum ethylbutylphosphinate (0.7)-aluminum diethylphosphinate (0.3) complex.
FIG. 2 is a DSC diagram of the aluminum ethylbutylphosphinate-aluminum diethylphosphinate complex as shown in FIG. 1.
FIG.3 is a DSC diagram of a mixture of aluminum ethylbutylphosphinate and aluminum diethylphosphinate (at a molar ratio of 0.7:0.3).
FIG. 4 is a DSC diagram of aluminum ethylbutylphosphinate.
FIG. 5 is a DSC diagram of aluminum diethylphosphinate.
FIG. 6 is a DSC diagram of aluminum diethylphosphinate added with 8% of a phosphorus-containing aluminum salt complex (calculated with the total mass of the phosphorus-containing aluminum salt complex and the aluminum diethylphosphinate as 100%).
FIG. 7 is a DSC diagram of aluminum diethylphosphinate added with 30% of a phosphorus-containing aluminum salt complex (calculated with the total mass of the phosphorus-containing aluminum salt complex and the aluminum diethylphosphinate as 100%).

### DETAILED DESCRIPTION

The present invention is further elaborated below in combination with the attached drawings and specific embodiments. It is understood that these embodiments are used only to illustrate the present invention, rather than to limit the scope of the present invention. Operation methods without specific conditions in the following embodiments are usually used in accordance with conventional conditions, or in accordance with conditions recommended by manufacturers.

### Synthesis of an aluminum ethylbutylphosphinate (0.2)-aluminum diethylphosphinate (0.8) complex

The aluminum ethylbutylphosphinate (0.2)-aluminum diethylphosphinate (0.8) complex has a molecular structure shown as follows:

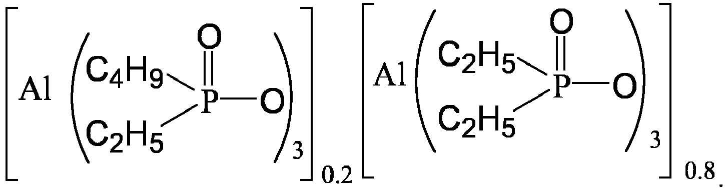

A preparation process is as follows. 34.4 g (0.2 mol) of sodium ethylbutylphosphinate and 115.2 g (0.8 mol) of sodium diethylphosphinate were dissolved in 381.7 g of water in a 2 L reactor and fully stirred for dissolution to obtain a mixed solution of sodium ethylbutylphosphinate and sodium diethylphosphinate. 57 g of aluminum sulfate was dissolved in 133 g of water in a 500 mL beaker, and 4.0 g of concentrated sulfuric acid with a concentration of 98 wt% was added into a resulting aluminum sulfate solution, fully stirred and mixed uniformly, and transferred to a dropping funnel. The reactor was heated to increase the temperature to 90°C, then the aluminum sulfate solution containing sulfuric acid was dropped, and after the dropping was completed within 2 h, heat preservation was performed to carry out a reaction continuously for 1 h. Filtration was performed under heat conditions, a precipitate was washed for several times, and the washing was stopped until an electrical conductivity of washing effluent was less than 200 µs/cm. A resulting material was transferred to an oven, heated to 120°C and dried for 60 min until a moisture content of a solid was 0.1 wt%. The solid was heated to 180°C at a rate of 2°C/min and maintained for 60 min. Then, the solid was heated to 320°C at a rate of 1°C/min, maintained for 30 min, cooled to normal temperature and discharged to obtain the aluminum ethylbutylphosphinate (0.2)-aluminum diethylphosphinate (0.8) complex, recorded as complex-1. The material was crushed to an average particle size (D50) of 38.0 µm.

With reference to the above preparation process, other complexes can be obtained by changing the type and molar ratio of raw materials during feeding.
Complex-2: An aluminum ethylbutylphosphinate (0.3)-aluminum diethylphosphinate (0.7) complex was milled to an average particle size (D50) of 35.2 µm.
Complex-3: An aluminum ethylbutylphosphinate (0.2)-aluminum diethylphosphinate (0.7)-aluminum ethylhexylphosphinate (0.1) complex was milled to an average particle size (D50) of 36.1 µm.
Complex-4: An aluminum ethylbutylphosphinate (0.2)-aluminum diethylphosphinate (0.7)-aluminum phosphite (0.1) complex was milled to an average particle size (D50) of 37.4 µm.
Complex-5: An aluminum ethylbutylphosphinate (0.2)-aluminum diethylphosphinate (0.7)-aluminum ethylphosphite (0.1) complex was milled to an average particle size (D50) of 35.8 µm.
Complex-6: An aluminum ethylbutylphosphinate (0.2)-aluminum diethylphosphinate (0.7)-aluminum ethylhexylphosphinate (0.05)-aluminum phosphite (0.05) complex was milled to an average particle size (D50) of 38.5 µm.
Complex-7: An aluminum ethylbutylphosphinate (0.2)-aluminum diethylphosphinate (0.7)-aluminum ethylhexylphosphinate (0.05)-aluminum ethylphosphite (0.05) complex was milled to an average particle size (D50) of 37.6 µm.
Complex-8: An aluminum ethylbutylphosphinate (0.2)-aluminum diethylphosphinate (0.7)-aluminum ethylphosphite (0.05)-aluminum phosphite (0.05) complex was milled to an average particle size (D50) of 37.0 µm.
Complex-9: An aluminum ethylbutylphosphinate (0.2)-aluminum diethylphosphinate (0.65)-aluminum ethylhexylphosphinate (0.05)-aluminum ethylphosphite (0.05)-aluminum phosphite (0.05) complex was milled to an average particle size (D50) of 38.4 µm.
Complex-10: An aluminum ethylbutylphosphinate (0.7)-aluminum diethylphosphinate (0.3) was milled to an average particle size (D50) of 37.7 µm.

The aluminum diethylphosphinate, LFR-8003, with an average particle size (D50) of 39.2 µm, was purchased from Jiangsu Liside New Materials Co., Ltd.

The aluminum ethylbutylphosphinate, with an average particle size (D50) of 42.6 µm, was self-made.

### Example 1

A preparation process is as follows. 144 g (1 mol) of sodium diethylphosphinate was dissolved in 336 g of water in a 2 L reactor and fully stirred for dissolution to obtain a sodium diethylphosphinate solution. 2.6 g (2 wt%) of the complex-1 was added and fully stirred, so as to uniformly disperse the complex in the solution. 57 g of aluminum sulfate was dissolved in 133 g of water in a 500 mL beaker, and 3.0 g of concentrated sulfuric acid with a concentration of 98 wt% was added into a resulting aluminum sulfate solution, fully stirred and mixed uniformly, and transferred to a dropping funnel. The reactor was heated to increase the temperature to 90°C, then the aluminum sulfate solution containing sulfuric acid was dropped, and after the dropping was completed within 2 h, heat preservation was performed to carry out a reaction continuously for 1 h. Filtration was performed under heat conditions, a precipitate was washed for several times, and the washing was stopped until an electrical conductivity of washing effluent was less than 200 µs/cm. A resulting material was transferred to an oven, heated to 120°C and dried for 60 min until a moisture content of a solid was 0.1 wt%. The solid was cooled to normal temperature and discharged to obtain aluminum diethylphosphinate. The particle size was tested, and results are shown in Table 1.

A particle size test method is as follows. A laser particle size tester was used for testing. Powder was dispersed in a 95 vol% ethanol solution, and then tested under ultrasonic treatment to obtain particle size and distribution results, and the content of a fine powder with a particle size of less than 5 µm was counted.

### Example 2

Based on the same implementation process in Example 1, the added amount of the complex-1 was 5.2 g (4 wt%), and other conditions were unchanged. Results are shown in Table 1.

### Example 3

Based on the same implementation process in Example 1, the average particle size of the added complex-1 was 25 µm, and other conditions were unchanged. Results are shown in Table 1.

### Example 4

Based on the same implementation process in Example 1, the same mass of the complex-2 was added, and other conditions were unchanged. Results are shown in Table 1.

### Comparative Example 1

Based on the same implementation process in Example 1, except that no complex was added, other conditions were unchanged. Results are shown in Table 1.

### Comparative Example 2

Based on the same implementation process in Example 1, except that the same mass of aluminum diethylphosphinate was added to replace the complex-1, other conditions were unchanged. Results are shown in Table 1.

### Comparative Example 3

Based on the same implementation process in Example 1, except that the same mass of aluminum ethylbutylphosphinate was added to replace the complex-1, other conditions were unchanged. Results are shown in Table 1.

### Comparative Example 4

Based on the same implementation process in Example 1, except that the same mass of a mixture of aluminum ethylbutylphosphinate and aluminum diethylphosphinate (at a molar ratio of 0.2:0.8) was added to replace the complex-1, other conditions were unchanged. Results are shown in Table 1.

### Comparative Example 5

Based on the same implementation process in Example 1, the average particle size of the added complex-1 was 5 µm, and other conditions were unchanged. Results are shown in Table 1.

### Comparative Example 6

Based on the same implementation process in Example 1, 0.01 g of the complex-1 was added, and other conditions were unchanged. Results are shown in Table 1.

### Comparative Example 7

Based on the same implementation process in Example 1, the same mass of the complex-10 was added, and other conditions were unchanged. Results are shown in Table 1.

**Table 1**

| | D50 (µm) | D100 (µm) | Distribution percentage of particles with a particle size of less than 5 µm (wt%) |
|---|---|---|---|
| Example 1 | 43.2 | 91.3 | 1.2 |
| Example 2 | 44.5 | 89.5 | 1.0 |
| Example 3 | 38.3 | 92.6 | 2.8 |
| Example 4 | 42.4 | 90.1 | 1.1 |
| Comparative Example 1 | 36.2 | 138.5 | 14.3 |
| Comparative Example 2 | 38.5 | 126.3 | 13.6 |
| Comparative Example 3 | 39.0 | 124.5 | 13.4 |
| Comparative Example 4 | 38.9 | 123.4 | 13.6 |
| Comparative Example 5 | 39.2 | 118.6 | 12.0 |
| Comparative Example 6 | 36.0 | 139.2 | 14.6 |
| Comparative Example 7 | 37.6 | 122.3 | 12.2 |

As can be seen from the results, particles obtained by using the phosphorus-containing aluminum salt complex of the present application have a larger particle size, narrower distribution and a greatly reduced fine powder content.

### Example 5

Based on the same implementation process in Example 1, the same mass of the complex-3 was added, and other conditions were unchanged. Results are shown in Table 2.

### Example 6

Based on the same implementation process in Example 1, the same mass of the complex-4 was added, and other conditions were unchanged. Results are shown in Table 2.

### Example 7

Based on the same implementation process in Example 1, the same mass of the complex-5 was added, and other conditions were unchanged. Results are shown in Table 2.

### Example 8

Based on the same implementation process in Example 1, the same mass of the complex-6 was added, and other conditions were unchanged. Results are shown in Table 2.

### Example 9

Based on the same implementation process in Example 1, the same mass of the complex-7 was added, and other conditions were unchanged. Results are shown in Table 2.

### Example 10

Based on the same implementation process in Example 1, the same mass of the complex-8 was added, and other conditions were unchanged. Results are shown in Table 2.

### Example 11

Based on the same implementation process in Example 1, the same mass of the complex-9 was added, and other conditions were unchanged. Results are shown in Table 2.

**Table 2**

| | D50 (µm) | D100 (µm) | Distribution percentage of particles with a particle size of less than 5 µm (wt%) |
|---|---|---|---|
| Example 5 | 35.2 | 86.5 | 1.8 |
| Example 6 | 36.6 | 87.3 | 1.6 |
| Example 7 | 37.3 | 88.6 | 1.8 |
| Example 8 | 33.8 | 90.1 | 2.0 |
| Example 9 | 31.4 | 93.5 | 2.2 |
| Example 10 | 32.0 | 94.3 | 2.3 |
| Example 11 | 30.1 | 96.5 | 2.6 |

The results in Table 2 show that the multicomponent phosphorus-containing aluminum salt complex based on aluminum ethylbutylphosphinate and aluminum diethylphosphinate can also affect a crystallization process in a preparation process of aluminum diethylphosphinate, and an aluminum diethylphosphinate crystal with a low fine powder content, a large particle size and narrow distribution can be obtained.

### Example 12

Based on the same implementation process in Example 1, 2.5 g of the complex-1 and 0.1 g of aluminum ethylbutylphosphinate were added, and other conditions were unchanged. Results are shown in Table 3.

### Example 13

Based on the same implementation process in Example 1, 2.5 g of the complex-1 and 0.1 g of aluminum phosphite were added, and other conditions were unchanged. Results are shown in Table 3.

### Example 14

Based on the same implementation process in Example 1, 2.5 g of the complex-1 and 0.1 g of aluminum phosphate were added, and other conditions were unchanged. Results are shown in Table 3.

**Table 3**

| | D50 (µm) | D100 (µm) | Distribution percentage of particles with a particle size of less than 5 µm (wt%) |
|---|---|---|---|
| Example 12 | 42.8 | 91.2 | 1.3 |
| Example 13 | 43.0 | 90.7 | 1.2 |
| Example 14 | 42.3 | 90.2 | 1.2 |

The results in Table 3 show that by using the method of the present application, regulation and control of the crystallization process in the preparation process of aluminum diethylphosphinate are not affected by the presence of a small amount of other non-compound salts in the phosphorus-containing aluminum salt complex of the present application.

### Use of aluminum diethylphosphinate

### Example 15

Flame retardant glass fibre-reinforced PPA was prepared by a conventional method using 50 wt% of high temperature nylon PPA, 30 wt% of glass fibres and 20 wt% of aluminum diethylphosphinate prepared in Example 1, continuous operation conditions were investigated for 10 hours, a sample was prepared, and the flame retardant property of the sample was tested. Results: During operation for 10 hours, failure shutdown caused by bridging and the like is not observed, and the flame retardant property of the material reaches UL94 V0 (0.8 mm).

### Comparative Example 8

Flame retardant glass fibre-reinforced PPA was prepared by a conventional method using 50 wt% of high temperature nylon PPA, 30 wt% of glass fibres and 20 wt% of aluminum diethylphosphinate prepared in Comparative Example 1, continuous operation conditions were investigated for 10 hours, a sample was prepared, and the flame retardant property of the sample was tested. Results: After operation for 10 hours, failure shutdown caused by bridging and the like is observed for 3 times, and the flame retardant property of the material reaches UL94 V0 (0.8 mm).

The above results show that by using the aluminum diethylphosphinate prepared by the method of the present invention, failure shutdown caused by bridging and other problems will not be found, and the flame retardant property is maintained.

In addition, it is understood that after reading the description of the contents of the present invention, persons skilled in the art may make various changes or modifications to the present invention, and all the equivalent forms also fall within the scope limited by the claims attached to the present application.

## Claims

1. A preparation method for an aluminum diethylphosphinate crystal with a low fine powder content, **characterized by** comprising: uniformly dispersing a phosphorus-containing aluminum salt complex, as a seed crystal, in an aqueous solution of soluble diethylphosphinate, adding a water-soluble aluminum salt solution containing a strong acid to carry out a reaction at 70-95°C, and after the reaction is completed, fltering, washing and drying a solid product to obtain the aluminum diethylphosphinate crystal with a low fine powder content;
wherein the phosphorus-containing aluminum salt complex has a structure as shown in a formula (I) below: 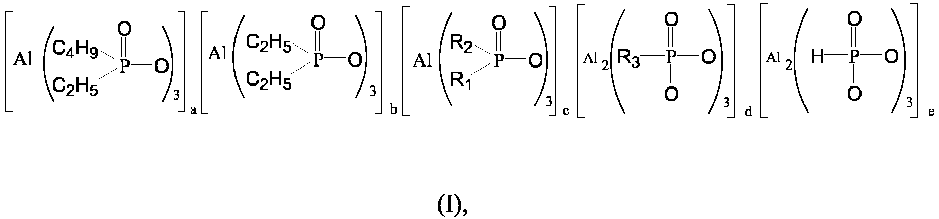
in the formula (I), a, b, c, d and e are all molar ratios, a is 0.1-0.5, b is 0.5-0.9, c, d and e are 0-0.3, and a+b+c+d+e=1; R₁ and R₂ are independently selected from H and C₁-C₆ alkyl, and when one of the R₁ and R₂ is ethyl, the other one is not ethyl and butyl; R₃ is C₁-C₆ alkyl;
calculated with a theoretical mass of the aluminum diethylphosphinate product as 100%, an added amount of the phosphorus-containing aluminum salt complex is 0.01-10%;
and an average particle size (D50) of the phosphorus-containing aluminum salt complex satisfies 10 µm<D50<50 µm.

2. The preparation method according to claim 1, **characterized in that** calculated with the theoretical mass of the aluminum diethylphosphinate product as 100%, an added amount of the phosphorus-containing aluminum salt complex is 0.1-5%.

3. The preparation method according to claim 1, **characterized in that** the average particle size (D50) of the phosphorus-containing aluminum salt complex satisfies 20 µm<D50<40 µm.

4. The preparation method according to claim 1, **characterized in that** the phosphorus-containing aluminum salt complex further comprises at least one of the following components (A)-(C):
(A) one or more non-compound salts of ethylbutylphosphinate, dibutylphosphinate, ethylhexylphosphinate, butylhexylphosphinate and dihexylphosphinate;
(B) alkylphosphite;
(C) one or more of a sulfate, a chloride, a phosphate, a phosphite, a hypophosphite, a nitrate, an acetate, a nitrogen-containing compound, an iron-containing compound, a calcium-containing compound, a magnesium-containing compound, a titanium-containing compound, a sodium-containing compound and a potassium-containing compound.

5. The preparation method according to claim 1, **characterized in that** the strong acid comprises at least one of sulfuric acid, nitric acid, hydrochloric acid and phosphoric acid;
and calculated with the theoretical mass of the aluminum diethylphosphinate product as 100%, an added amount of the strong acid is 1-5%.

6. The preparation method according to claim 1, **characterized in that** an aluminum salt in the water-soluble aluminum salt solution comprises at least one of aluminum sulfate, aluminum nitrate and aluminum chloride.

7. The preparation method according to claim 1, **characterized in that** the prepared aluminum diethylphosphinate crystal with a low fine powder content comprises one or more mixture impurities of aluminum diethylphosphinate, aluminum ethylbutylphosphinate, aluminum dibutylphosphinate, aluminum ethylhexylphosphinate, aluminum butylhexylphosphinate and aluminum dihexylphosphinate.

8. The preparation method according to claim 1, **characterized in that** the aluminum diethylphosphinate crystal with a low fine powder content comprises a phosphorus-containing aluminum salt complex seed crystal having an average particle size (D50) of 20 µm<D50<50 µm and a bulk density of 500-700 g/L, and a content of a fine powder with a particle size of less than 5 µm is less than 10 wt%.

9. An aluminum diethylphosphinate crystal with a low fine powder content prepared by the preparation method according to any one of claims 1-8.

10. Use of the aluminum diethylphosphinate crystal with a low fine powder content according to claim 9 in flame retardance of glass fibre-reinforced engineering plastics, **characterized in that** the glass fibre-reinforced engineering plastics adopt at least one of polyurethane, a thermoplastic elastomer, an epoxy resin, a thermosetting unsaturated polyester, nylon, a thermoplastic polyester and POK as a polymer matrix.
